# EUROPÄISCHE PATENTSCHRIFT

(11) **EP 1 378 160 B1**
(45) Veröffentlichungstag und Bekanntmachung des Hinweises auf die Patenterteilung: **28.12.2005**
(21) Anmeldenummer: 03013595.8
(22) Anmeldetag: 14.06.2003
(51) Int. Cl.: A01D 45/02

(54) **Mäh- und Fördereinrichtung für stängeliges Erntegut**
Cutting and feeding device for stem crop
Dispositif de coupe et d'alimentation pour récolte de plantes à tiges

(30) Priorität: 04.07.2002 DE 10230236
(43) Veröffentlichungstag der Anmeldung: 07.01.2004
(73) Patentinhaber: CLAAS Saulgau GmbH, 88348 Bad Saulgau (DE)
(72) Erfinder: Rauch, Hans, 88348 Bad Saulgau (DE)

(56) Entgegenhaltungen:
- DE-A- 19 639 805
- US-A1- 2001 054 278

## Beschreibung

Die Erfindung betrifft eine Mäh- und Fördereinrichtung für stängeliges Erntegut nach dem Oberbegriff des Anspruchs 1.

Mäh- und Fördereinrichtungen für Feldhäcksler mit einer Reversiereinrichtung gestatten es, den Gutfluss in seiner Förderrichtung umzukehren. Dieses dient dazu, Verstopfungen der Vorsatzgeräte wieder aufzulösen. Zu diesem Zweck werden nicht nur die Einzugs- und Presswalzen des Häckslers, sondern auch die Mäh- und Förderwerkzeuge der Mäh- und Fördereinrichtung in Ihrer Bewegungsrichtung, und damit in ihrer Förderrichtung, gegenüber dem normalen Betriebszustand umgekehrt.

In Verbindung mit Feldhäckslern und deren Vorsatzgeräte sind Mäh- und Fördereinrichtungen zum Mähen von stängeligem Halmgut, wie beispielsweise Mais, mit umlaufenden Mäh- und Förderwerkzeugen bekannt.

Eine gattungsbildendes Ausführungsbeispiel für ein umlaufend rotierendes Mäh- und Fördersystem einer Mäh- und Fördereinrichtung ist in der DE 196 39 805 dargestellt.

Die in der DE 196 39 805 beschrieben Mäh- und Fördereinrichtung besteht aus quer zur Fahrtrichtung nebeneinander in einem Rahmengestell gelagerten Mäh- und Förderotoren, wobei je zwei benachbarte Mäh- und Förderotoren gegenläufig zueinander drehen.

Ein Mäh- und Förderotor besteht aus einer unten liegenden Schneidscheibe und darüber liegend auf einer gemeinsamen Antriebswelle aus zwei in Abstand zueinander befindlichen Förderscheiben. Die Förderscheiben weisen Ausbuchtungen auf, in denen die Maisstängel nach dem Abmähen während des Fördervorgangs in Richtung der Häcksler-Einzugswalzen gefördert und gehalten werden.

Dabei sind den Mäh- und Förderotoren Stängelheber mit Führungselementen, beispielsweise ausgebildet als Führungsfinger, zugeordnet und vorgelagert, deren Aufgabe darin besteht, die abgemähten Maisstängel in die Ausbuchtungen der Förderotore hineinführen und die somit zu einen kontinuierlichen und prozesssicheren Förderungsablauf beitragen.

Dabei greift ein Teil der Führungsfinger, die so ausgebildet sind, dass sie teils tangential und teils radial zur Rotationsachse der Mäh- und Förderotoren verlaufen, in den Zwischenraum der zueinander beabstandeten und übereinanderliegenden Förderscheiben ein.

Die Führungsfinger als Führungselemente drängen somit die Maisstängel in die Fördertaschen der Förderrotore hinein, von denen sie dann auf dem weiteren Transportweg mitgenommen werden.

Das Prinzip der in den Förderbereich tangential eingreifenden Führungsfinger als Führungselemente an Mäh- und Förderrotoren ist prinzipiell auch anwendbar auf umlaufende Mäh- und Fördereinrichtungen, die aus umlaufend angetrieben Gliederketten bestehen und wobei die Förderelemente Teil der Kettenglieder mit entsprechenden Ausbuchtungen sind.

Ein derartiges Erntegerät zum Ernten von Mais ist in der DE 199 51 459 beschrieben als eine auf einer Bewegungsbahn endlos umlaufende Fördereinrichtung, deren Schneidmesser ebenfalls unterhalb der Fördereinrichtung angeordnet sind. Auch diesen Kettenglieder sind Führungselemente zugeordnet, deren Aufgabe darin besteht, die Maisstängel in die Ausbuchtungen als Mitnehmertaschen der Kettenglieder für den Transport hineinzudrängen. Dabei sind die zuvor angesprochenen Führungselemente an den den Schneidwerkzeugen vorgelagerten Teilungsspitzen abgestützt.

Unabhängig von der Ausgestaltung der Mäh- und Fordereinrichtungen können während des Arbeitsprozesses des Erntens aus verschiedensten Ursachen heraus Störungen im Gutfluss des Ernteguts entstehen, die ein Reversieren der Einzugsorgane eines Feldhäckslers erforderlich machen. Davon betroffen sind dann auch die Antriebselemente der Mäh- und Fördereinrichtung

Die beabsichtigte Wirkung des Reversierens ist dabei, durch Umkehr der Förderichtung das bereits in die Einzugs- und Presswalzen eingezogenen Erntegut wieder aus diesem Bereich zu entfernen.

Dem nunmehr in entgegengesetzter Förderichtung bewegten Gutstrom stehen dabei dann die Einweiselemente eher hinderlich entgegen. Dieses kann dazu führen, das die Maisstängel an diesen Stellen verquetscht und vermußt werden oder aber, dass die Einweiselemente ungünstigstenfalls verbogen werden oder gar abbrechen.

Mit zunehmend größer werdenden Arbeitsbreiten kann es dabei während des Reversierens durch eingeklemmt Maisstängel auch zu Blockaden des Antriebs der Reversiereinrichtung kommen, oder die Überlastsicherungen sprechen an. Damit ist dann auch der Reversiervorgang außer Kraft gesetzt, und dieses ist dann ebenfalls eine weitere Problematik innerhalb der Vorgangs der Beseitigung eines derartigen Störfalls im Häckselbetrieb mit einem Vorsatzgerät eines Häckslers.

Die **Aufgabe der Erfindung** ist es daher, die Prozesssicherheit einer Mäh- und Fördereinrichtung eines Vorsatzgerätes zum mähen von stängeligem Erntegut sowohl vorrichtungsmäßig als auch verfahrenstechnisch weiter zu verbessern. Dieses gilt insbesondere auch für den Reversiervorgang.

Gelöst wird die Aufgabe der Erfindung mit den kennzeichnenden Merkmalen der unabhängigen Ansprüche nach der Erfindung. Weitere vorteilhafte Ausgestaltungen der Erfindung sind den abhängigen Ansprüchen, der Beschreibung und den Figurendarstellungen zu entnehmen.

Erfindungsgemäß können die Führungselemente einer Mäh- und Fördereinrichtung zum Einweisen und Führen der Stängel in die Fördertaschen der Förderelemente ihre Lage verändern. Dieses kann sowohl aktiv als auch passiv erfolgen. Eine aktive Lageveränderung kann dabei beispielsweise durch einen Stellantrieb erfolgen.

Ein derartiger Stellantrieb kann dabei so angesteuert und betätigt werden, dass dadurch die Lage eine Führungselements gegenüber den Mäh- und Förderwerkzeugen einer Mäh- und Fördereinrichtung verändert werden kann, so dass durch die neue Lage des Förderelements der rückwärts bewegte Förderstrom nicht mehr beeinträchtigt werden kann.

Eine passive Lageveränderung der Förderelemente kann beispielsweise dadurch herbeigeführt werden, dass die Stängel des rückwärts bewegten Förderstroms selber die Führungselemente gewissermaßen aus dem Weg räumen und umgekehrt, diese wieder in ihre alte Lage als Führungs- und

Einweisposition zurück bewegen.

Der Vorteil der Erfindung besteht insbesondere darin, dass die Führungselement dadurch vor dem Einleiten oder zu Beginn des Reversierprozesses gezielt und beabsichtigt völlig aus dem Wirkbereich der Fördereinrichtung entfernt werden können, so das diese den nunmehr rückwärts ablaufenden Förderprozess nicht mehr behindern können.

Ein weiterer Vorteil der Erfindung besteht darin, das durch den aktiven Einsatz eines Stellantriebs auch während des Normalbetriebs auf den Abstand der Führungselemente gegenüber den Förderorganen Einfluss genommen werden kann, so das dieser Abstand je nach dem zu erntenden stängeligem Halmgut auf einen optimalen Abstand gegenüber den Mäh- und Förderwerkzeugen eingestellt werden kann.

Die Ansteuerung der Stellantriebe kann dabei sowohl manuell als auch automatisch erfolgen.

In einer besonders vorteilhaften Ausführungsform kann die Ansteuerung eines Stellantriebs zur Lageveränderung eine Führungselements für den Reversiervorgangs dabei automatisch erfolgen, indem die Befehlsfolge für die Betätigung der Stellantriebe, was das Rückwärtsbewegen vor Einleitung des Reversierens oder. das Vorwärtsbewegen nach Beendigung des Reversierens betrifft, in den automatischen Ablauf der Steuerkette des Reversiervorgangs integriert wird.

Die Führungselemente können dabei wahlweise direkt oder indirekt mit dem Rahmengestell eines Vorsatzgerätes verbunden und auf diesem abgestützt sein. Dabei können die Bewegungsvorgänge zur Lageveränderung der Führungselemente durch entsprechend angepasste Führungen sowohl linearbeweglich als auch schwenkbeweglich ausgeführt sein. Ebenso ist eine Mischform beider Bewegungsarten durch entsprechend angepasste Führungen durchaus möglich.

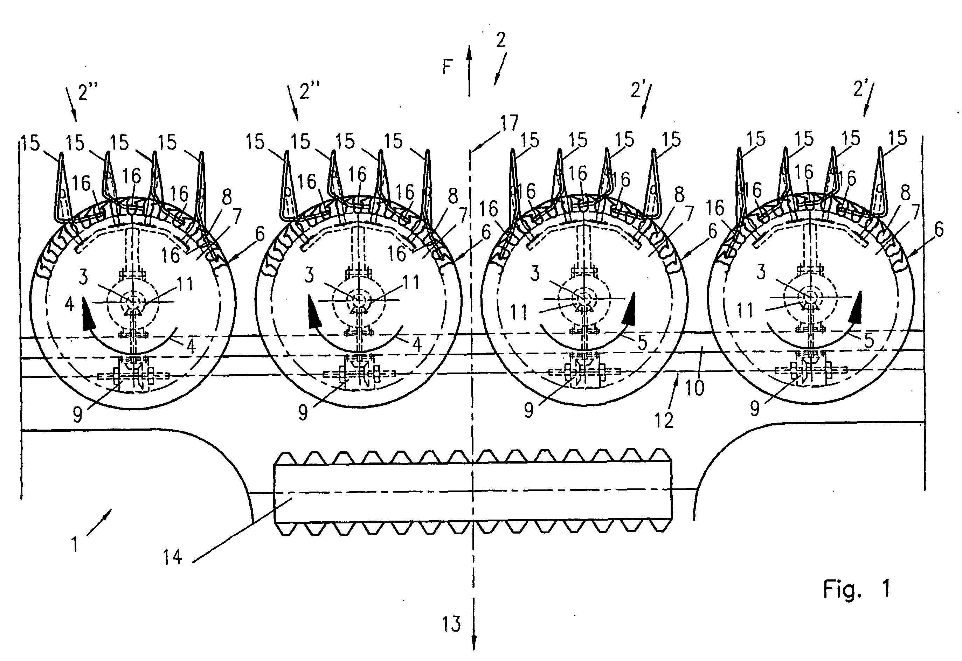

An Ausführungsbeispielen, welche anhand der Fig. 1 bis Fig. 9 dargestellt sind, ist die Erfindung nachfolgend ausführlich anhand einer linearbeweglichen und einer schwenkbeweglichen Führung beispielsweise in Verbindung mit einem Stellantrieb erläutert:

### Bezugszeichenliste

- 1: Vorsatzgerät
- 2: Mäh- und Fördereinrichtung
- 2',2": Mäh- und Förderrotor
- 3: Rotationsachse
- 4,4': Förderrichtung
- 5.5': Förderrichtung
- 6: Messerscheibe
- 7: Förderscheibe
- 8: Fördertasche
- 9: Winkelgetriebe
- 10: Rahmenrohr
- 11: Winkelgetriebe
- 12: Antriebsstrang
- 13,13': Gutflussrichtung
- 14: Einzugswalze
- 15: Stängelheber
- 16: Führungselement
- 17: Längsmittelebene
- 18: Tragbügel
- 19: Segmentbogen
- 20: Förderbereich
- 21: Stellantrieb
- 22: Hydraulikzylinder
- 23: Differentialkolben
- 25: Kolbenstange
- 26: Quertraverse
- 27: Getriebegehäuse
- 28: Schraubenverbindung
- 29: Führungseinrichtung
- 30: Prismenstäbe
- 31: Prismenführungsbohrung
- 32: Bund
- 33: Wegeventil
- 34: Sperrventil
- 35: Hydraulikpumpe
- 36: Mengenteiler
- 37: Lagerauge
- 38: Lagerauge
- 39: Lagerauge
- 40: Lagerauge
- 41: Gelenkpunkt
- 42: Gelenkpunkt
- 43: Gelenkpunkt

- a: Schaltstellung
- b: Schaltstellung
- F: Fahrtrichtung

In Fig. 1 ist ein Ausschnitt aus einem Vorsatzgerät 1 für einen Maishäcksler in bekannter Bauweise in einer Draufsicht auf die Arbeitsebene dargestellt. Beidseitig der Längsmittelebene 17 des Vorsatzgerätes 1 sind je zwei Mäh- und Förderrotore 2' bzw. 2" dargestellt, die jeweils um ihre überwiegend lotrechte Rotationsachse 3, mit ihrer Drehrichtung als Förderrichtung 4 bzw. 5 umlaufend angetrieben sind. Dabei sind die zwei Mäh- und Förderrotore 2' bzw. 2" quer zur Fahrtrichtung F und nebeneinander angeordnet. Die Förderrichtungen 4 bzw. 5 sind durch Drehrichtungspfeile symbolisiert dargestellt.

Die Mäh- und Förderrotore 2' bzw. 2" auf einem nicht näher dargestellten Maschinengestell des Vorsatzgerätes angeordnet.

Derartige Mäh- und Förderrotore 2' bzw. 2" bestehen in bekannter weise aus einer Messerscheibe 6 und koaxial zur Rotationsachse 3 und oberhalb zur Messerscheibe 6 angeordnet mit zwei höhenmäßig zueinander beabstandeten Förderscheiben 7, welche an Ihrem Umfang Fördertaschen 8 zum Halten und Führen der Stängel aufweisen.

Antriebsseitig stehen die Mäh- und Förderrotore 2' bzw. 2" über zwei Winkelgetrieben 8 und 11 mit einem vorgelagerten Antriebsstrang 12 in Wirkverbindung, wobei die Winkelgetriebe 8 und 11 sich an einem Rahmenrohr 10 des nicht näher dargestellten Maschinengestells des Vorsatzgerätes abstützen.

In Fig. 1 sind den Mäh- und Förderrotore 2' bzw. 2" in Fahrtrichtung F Stängelheber 15 vorgelagert, die über entsprechend ausgeformte Tragbügel 18 an einem Segmentbogen 19 angeschraubt sind, und der unterhalb der Messerscheiben 6 starr an dem Gehäuse der jeweiligen Winkelgetriebe 11, und damit indirekt an dem Rahmenrohr 10 des Maschinengestells des Vorsatzgerätes abgestützt ist. Die rückwärtigen Teile der Stängelheber 15 sind dabei so ausgeformt, dass diese einen Führungsfinger als Führungselement 16 aufweisen, wobei die Führungsfinger horizontal liegend in den Förderbereich 20 der Fördertaschen 8 eines Mäh- und Förderrotors 2',2" eingreifen.

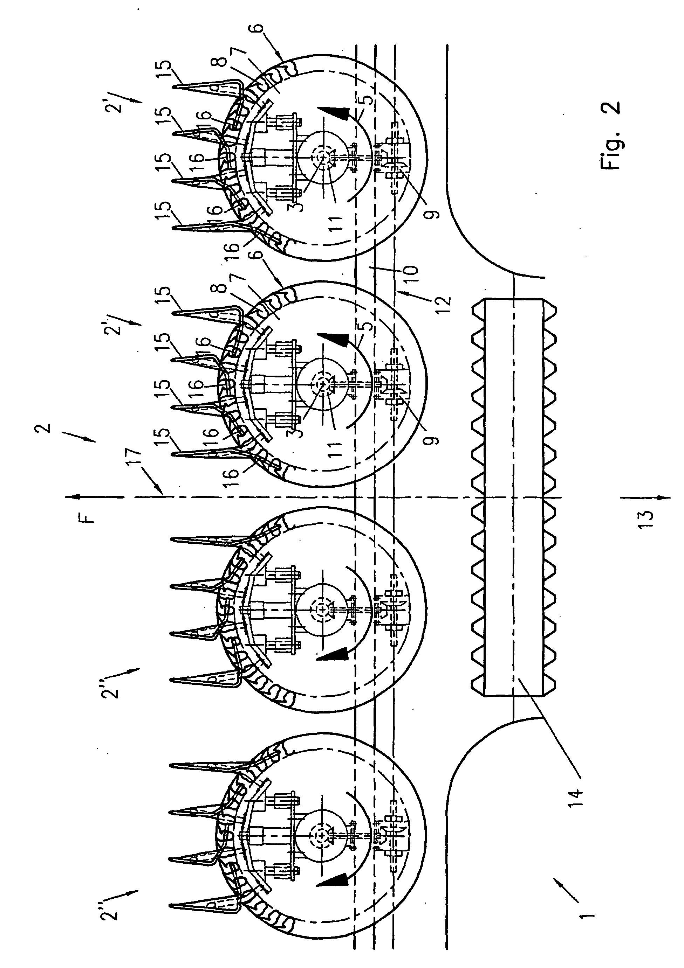

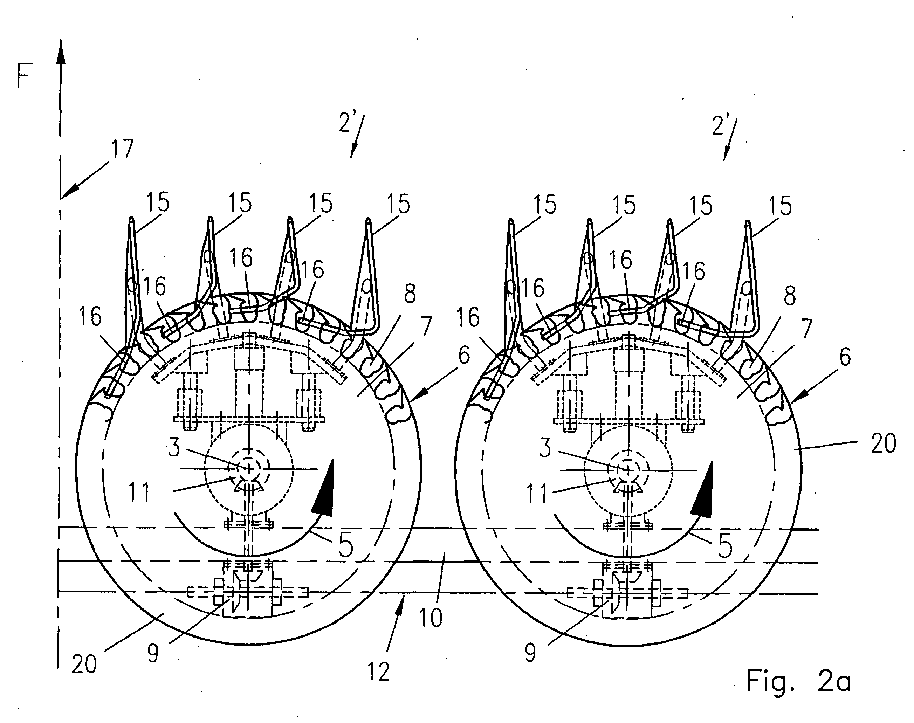

In Fig. 2 ist ein Vorsatzgerät 1 für einen Maishäcksler nach der Erfindung dargestellt. Die in Fig. 2 dargestellt Ansicht ist prinzipiell identisch mit der in der Fig.1 dargestellten. Dabei ist im Unterschied zur Fig. 1 der Segmentbogen 19 mit den daran befestigten Führungselementen 16 der jeweiligen Mäh- und Förderotoren 2',2" nicht starr mit dem Rahmenrohr 10 des Maschinenrahmens verbunden. Diese Starrheit kann unterbunden werden durch einem Stellantrieb 21, der in seinen Endlagen feststellbar ist. Fig. 1 zeigt die Führungselemente 16 in Eingriff stehend mit dem Förderbereich 20 der Mäh- und Förderotore 2',2" der Mäh- und Fördereinrichtung 2.

Fig. 2a zeigt in vergrößerter Darstellung einen Ausschnitt aus Fig. 2 und dabei insbesondere die beiden rechts der Mittelebene 17 angeordneten Mäh- und Förderotore 2',2'. Dargestellt in Fig. 2 ist die Betriebsstellung der mit den Stängelhebern 15 verbundenen Führungselemente 16.

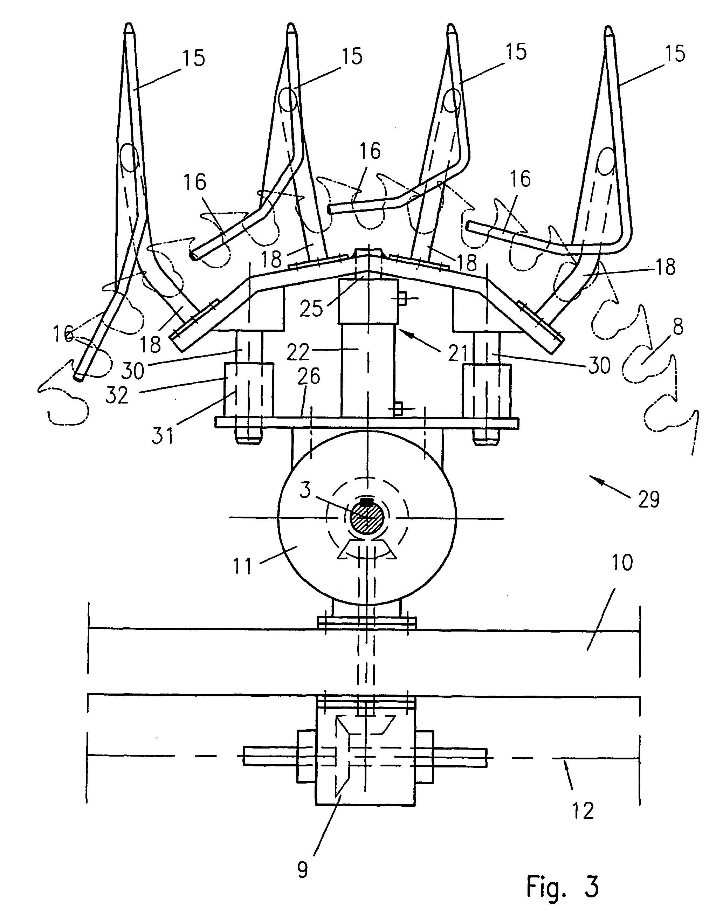

Fig. 3 zeigt den Stellantrieb 21 gemäß Fig. 2 bzw. Fig. 2a jedoch ohne den darüber liegenden Mäh- und Förderrotor 2' in vergrößerter Darstellung. Dabei ist die Außenkontur der Förderscheiben mit den Fördertaschen 8 bereichsweise strichpunktiert dargestellt.

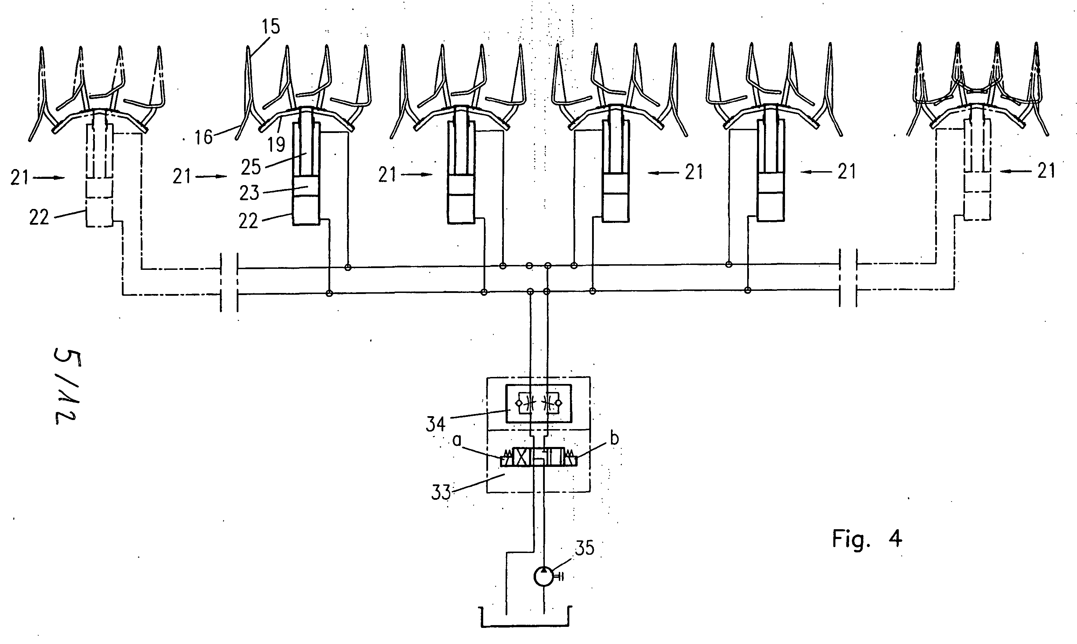

Fig. 4 zeigt ein vereinfacht dargestelltes Ausführungsbeispiel eines hydraulischen Schaltplans zur Betätigung der Stellantriebe 21. Als Energielieferant zur Betätigung der Stellantriebe 21 dient eine. Hydraulikpumpe 35. In dem Hydraulikschaltplan ist die Grundstellung der Stellantriebe 21, welche gleichzeitig eine Betriebsstellung im Mähbetrieb ist, dargestellt. In dem Ausführungsbeispiel ist der Stellantrieb 21 als beidseitig beaufschlagbarer Hydraulikzylinder 22 mit Differentialkolben 23 ausgeführt. In dieser Betriebsstellung ist die Kolbenstangen 25 des Differentialkolben 23 auf Block eingefahren. Die Differentialkolben 23 der Stellantriebe 21 werden in ihrer Betriebsstellung durch ein entsperrbares Sperrventil 34, beispielsweise ausgeführt als entsperrbares Zwillings-Rückschlagventil in Verbindung mit einem 4/3 Wegeventil 33 gehalten und arretiert. Das Wegeventil 33 befindet sich dabei im nichtangesteuerten Zustand in seiner mittleren Schaltstellung. Des weiteren kann das Wegeventil 33 in die Schaltstellungen a oder b überführt werden, welches ein Ein- bzw. Ausfahren der Kolbenstangen 25 der Hydraulikzylinder 22 der Stellantriebe 21 bewirkt.

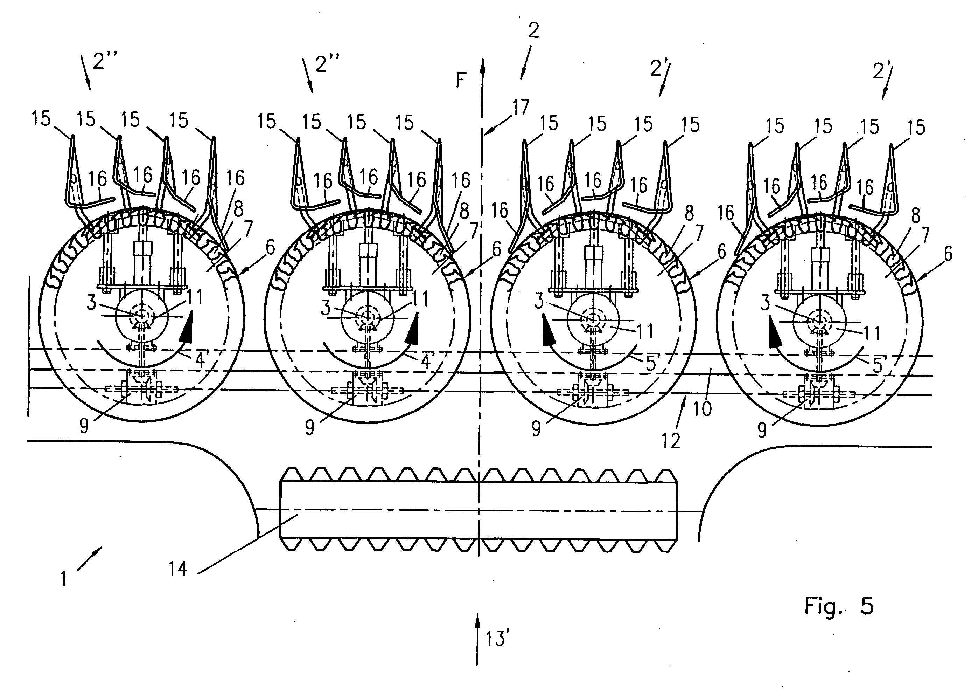

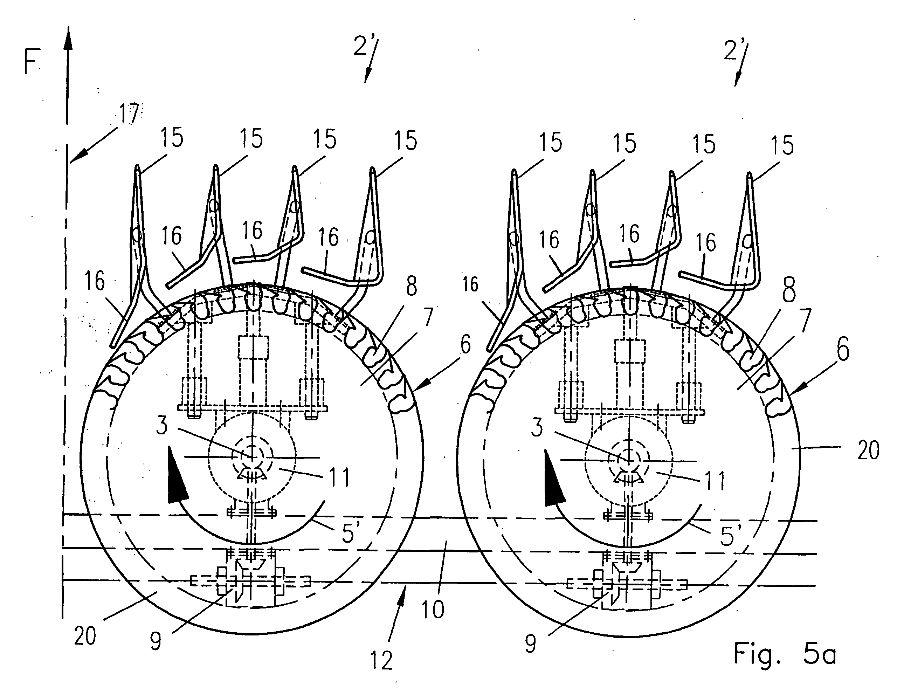

In Fig. 5 ist ein Vorsatzgerät 1 für einen Maishäcksler nach der Erfindung gemäß Fig. 2 in einer Reversiersituation dargestellt. In dieser Situation sind die Führungselemente 16 mittels der Stellantriebe 21 zuvor aus dem Förderbereich 20 der Fördertaschen 8 herausbewegt worden. Der Reversiervorgangs ist dadurch gekennzeichnet, das der Gutfluss von seiner Gutflussrichtung 13 nunmehr in die Gutflussrichtung 13' umgeschaltet wurde. Dabei wird auch die Mäh- und Fördereinrichtung 2 in Ihrer Bewegungsrichtung umgeschaltet. Dieses ist gekennzeichnet durch die Umkehrung der Förderrichtung 4, 5 nunmehr in die Förderrichtung 4', 5'.

Fig. 5a zeigt in vergrößerter Darstellung einen Ausschnitt aus Fig. 5 und dabei insbesondere die beiden rechts der Mittelebene 17 angeordneten Mäh- und Förderotore 2'.

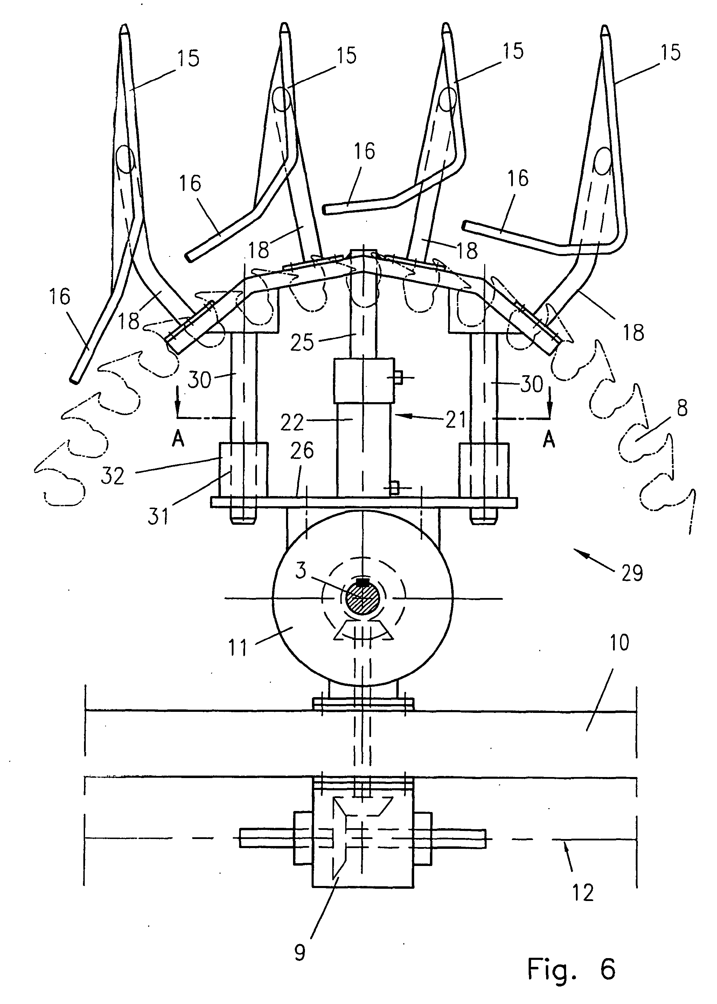

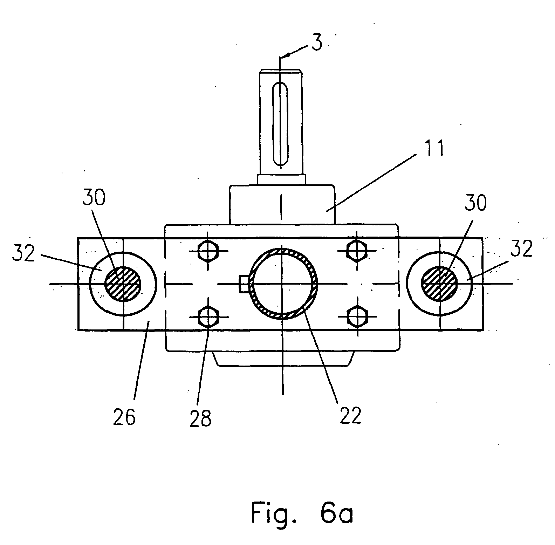

Fig. 6 zeigt den Stellantrieb 21 gemäß Fig. 5 bzw. Fig. 5a jedoch ohne den darüber liegenden Mäh- und Förderrotor 2' in vergrößerter Darstellung. Dabei ist die Außenkontur der Förderscheiben mit den Fördertaschen 8 bereichsweise strichpunktiert dargestellt.

Fig. 6a zeigt den Schnitt A-A gemäß Fig.6. Die Prismenführung 29 ist dabei konstruktiv so ausgebildet, das sie gleichzeitig die Sicherung gegen eine Verdrehung der Kolbenstange um deren Längsachse übernehmen kann. Dazu stützt sich die Kolbenstange mit den daran befestigten Stängelhebern und Führungselementn in den Prismenführungsbohrungen 31 der Quertraverse 26, und diese mittels der Schraubenverbindungen 28, an dem Kegelradgetriebe 11 ab.

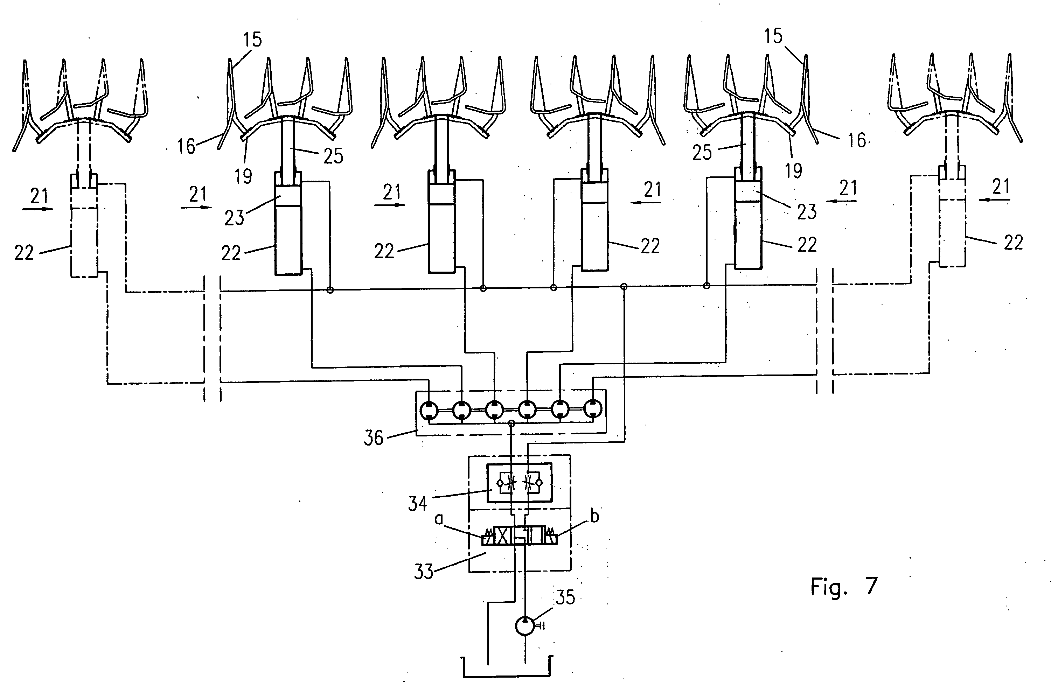

Fig. 7 zeigt einen erweiterten hydraulischen Schaltplan zur Betätigung der Stellantriebe 21 gemäß der Fig. 2 bis Fig. 6. Dabei ist dem Steuerkreislauf eine Gleichgangeinrichtung, beispielsweise ein Mengenteiler 36 zugeordnet, der einen Gleichgang aller Stellantriebe 21, d.h. eine Synchronisation des Bewegungsablaufs bewirkt. Dieses ist insbesondere dann von Vorteil, wenn die Stellantriebe 21 gleichzeitig dazu genutzt werden können, um die Einwirkstellung der Führungselemente (16) auf den Förderbereich 20 während des laufenden Mähbetriebs verändern zu können.

Der Stellantrieb 21 ist dabei so aufgebaut, dass das freien Ende der Kolbenstange mit dem Segmentbogen 19 verschweißt ist. Der Zylinderboden des Hydraulikzylinder 22 umfasst eine Quertraverse 26, die ihrerseits mittels Schraubenverbindungen 28 mit dem Getriebegehäuse 27 des Winkelgetriebes 11 verschraubt ist. Um eine eventuell mögliche Drehbewegung der Führungselemente (16) um die Längsachse der Kolbenstange 25 zu unterbinden, ist der Segmentbogen 19 gegen diese Drehbewegung durch eine Verdrehsicherung, die Teil einer Führungseinrichtung 29 ist, und die in diesem Ausführungsbeispiel als Prismenführung ausgeführt ist, abgesichert. Diese wird gebildet durch beidseitig des Hydraulikzylinder 22 parallel zu dessen Längsachse verlaufende Prismenstäbe 30, die beispielsweise aus verchromtem Kolbenstangenmaterial bestehen können. An den in bezug auf die Rotationsachsen 3 nach außen weisenden Enden der Prismenstäbe 30 sind diese mit dem jeweiligen Segmentbogen 19 fest verbunden, während sie an ihrem freien Ende in einer Prismenführungsbohrung 31, welche durch einem Bund 32 umfasst ist, der gleichzeitig Teil der Quertraverse 26 darstellt.

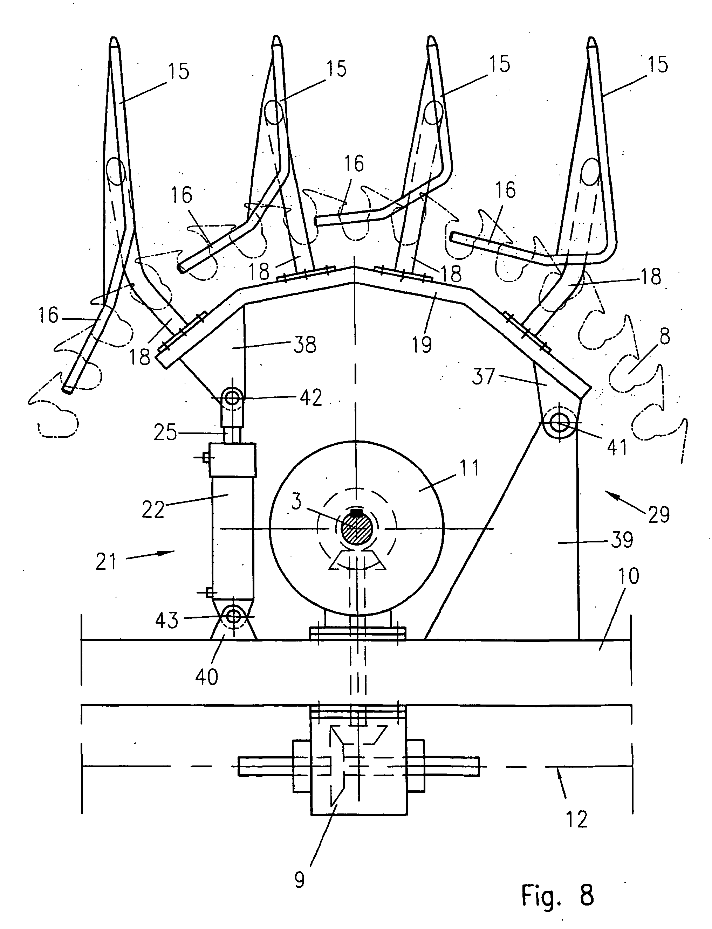

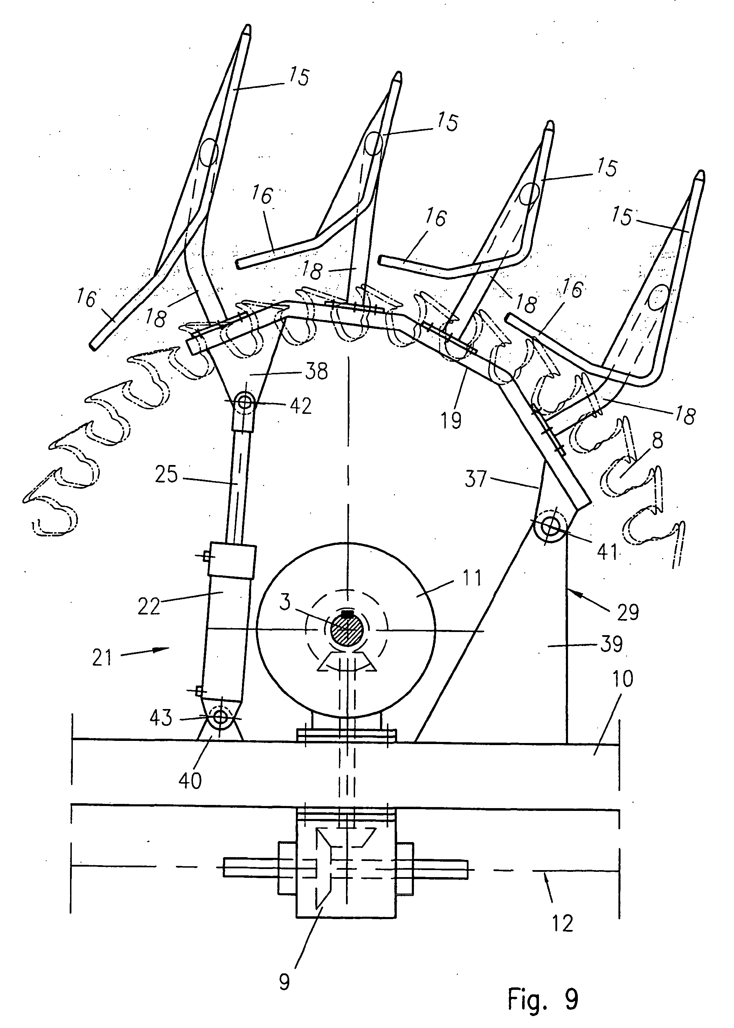

Fig. 8 und Fig. 9 zeigen ein weiteres Ausführungsbeispiel nach der Erfindung. In diesem ist der Stellantrieb 21 zur aktiven Verstellbarkeit der Führungselemente (16) in einen Schwenkantrieb integriert

Fig. 8 zeigt dabei die Führungselemente 16 einer Mäh- und Fördereinrichtung 2 in einer Einwirkstellung auf den Förderbereich 10, d.h. im eingeschwenkten Zustand in einer Eingriffsstellung. Dabei sind die Führungselemente 16 ebenfalls als Teil der Stängelheber 15 mittels Tragbügeln 18 an einem Segmentbogen 19 angeschraubt und eine Gruppe bildend zu einer Einheit zusammengefasst. Dabei handelt es sich in diesem Ausführungsbeispiel, was Führung und Bewegung der Führungselemente 16 betrifft, um eine Schwenkführung mit einer reinen Schwenkbewegung. Dazu befinden sich an dem Segmentbogen 19 zwei Lageraugen 37 und 38 in denen die Gelenkpunkte 41 und 42 verankert sind. In dem Gelenkpunkte 41 ist der Segmentbogen 19 gegenüber dem Rahmenrohr 10 und in dem Gelenkpunkte 42 gegenüber der Kolbenstange 25 des Hydraulikzylinders 22 abgestützt. Der Hydraulikzylinders 22 als Stellantrieb 21 ist dabei bodenseitig in dem Gelenkpunkt 43 des Lagerauges 40 gegenüber dem Rahmenrohr 10 abgestützt.

Fig. 9 zeigt dabei die Führungselemente 16 in einer Außereingriffstellung in Bezug auf den Förderbereich 10 im ausgeschwenkten Zustand. Die Schwenkbewegungen werden dabei durch den Hydraulikzylinder 22 als Stellantrieb 21 herbeigeführt.

In der Außereingriffstellung gemäß Ausführungsbeispiel nach Fig. 9 erfahren die Führungselemente 16 gegenüber ihrer Arbeitsstellung gemäß Fig. 8 zugleich eine Abstandsveränderung und eine Ausrichtungsveränderung ihrer Lage gegenüber dem Einwirkbereich des ihnen zugedachten Förderbereichs 20.

Die aktive Ansteuerung und damit die Betätigung eines Stellantriebs 21 kann durch eine manuelle Eingriffssteuerung vom Fahrersitz aus dem Führerhaus eines Feldhäckslers heraus erfolgen. Sie kann aber auch automatisch mit der Umsteuerung vom Normalbetrieb in der Reversierbetrieb und umgekehrt erfolgen.

Dabei kann das Steuersignal zur Betätigung des Reversierantriebs gegenüber dem Steuersignal zur Ansteuerung des Stelleantriebs 21 auch automatisch zeitverzögert erfolgen, so dass die Führungselemente 16 vor dem Ingangsetzen der geänderten Förderrichtung 4',5' aus dem Einwirkbereich des Förderbereichs 20 herausbewegt werden können. Umgekehrt kann dieses ebenfalls automatisch zeitverzögert beim Umschalten in den Normalbetrieb in umgekehrter Reihenfolge ablaufen.

Wie in dem Ausführungsbeispiel beschrieben, können die Führungselemente (16) einer Mäh- und Fördereinrichtung (2) in Gruppen zu einer Einheit zusammen gefasst werden, wie dieses beispielsweise durch ein verbindendes Element, wie das eines Stellbogens (19), dargestellt ist, und wobei eine derartige Gruppe von Führungselementen (16) dann von einem gemeinsamen Stellantrieb 21 betätigt werden kann. Andererseits kann auch jedem Führungselement ein eigener Stellantrieb zugeordnet sein.

Dabei ist dieser Bewegungsvorgang der Führungselemente 16 keineswegs auf rein lineare oder rein schwenkbare Bewegungsformen beschränkt. Die Bewegungsformen können je nach Ausführung der Stellantriebe 21 und deren Kinematiken auch Mischformen aus Linear- und Drehbewegungen sein.

Gemeinsam ist den die Führungseinrichtungen 29 erzeugenden Bewegungsformen der Führungselemente 16, das sie die Lage der Führungselemente 16 relativ zum Förderbereich 21 verändern können, so dass sie je nach dem Betriebszustand Normalbetrieb oder Reversierbetrieb auf den Förderbereich 21 verändernd auf diesen einwirken.

Des weiteren sind die Führungselemente 16 in Ihrer Ausgestaltung nicht notwendigerweise an Stängelhebern 15 gebunden, so das sie auch beispielsweise Bestandteil von Teilungsspitzen sein können oder auch völlig losgelöst von diesen in Funktion sein können..

Dabei ist die Anwendung der Erfindung keineswegs auf rein rotierende Mäh- und Fördereinrichtungen (2) beschränkt. Sie läst sich gleichermaßen auf andere, beispielsweise auf linear umlaufende, Fördertaschen (8) bildenden Förderelemente, die Teil einer umlaufende Gliederkette sind, und die somit einen Endlosstrang als Teil der Fördereinrichtung einer Mäh- und Fördereinrichtung (2) bilden, anwenden.

## Patentansprüche

1. Vorsatzgerät (1) zum Ernten von stängeligem Erntegut wie beispielsweise Mais, mit wenigstens einer Mäh- und Fördereinrichtung (2), wobei die wenigstens eine Mäh- und Fördereinrichtung (2) angetriebene Förderelemente mit Fördertaschen (8) zum Halten und Förderen der Stängel aufweist, und den Förderelementen in Fahrtrichtung (F) ein oder mehrere Führungselemente (16) vorgeordnet sind, die die Einweisung der Stängel in die Fördertaschen (8) unterstützen, **dadurch gekennzeichnet, dass** zumindest ein Führungselement (16) relativ zu der mit diesem Führungselement (16) in Wirkverbindung stehenden zumindest einen Mäh- und Fördereinrichtung (2) bewegbar ist.

2. Vorsatzgerät (1) für Feldhäcksler nach Anspruch 1, **dadurch gekennzeichnet, dass** die Veränderung der Lage eines Führungselementes passiv oder aktiv erfolgen kann.

3. Vorsatzgerät (1) für Feldhäcksler nach Anspruch 1 und 2, **dadurch gekennzeichnet, dass** eine Führungselement passiv unter Einwirkung äußerer Kräfte, die ursprünglich dem Gutstrom selbst als Teil des Fördervorgang zuzuordnen sind, seine Lage verändern kann.

4. Vorsatzgerät (1) für Feldhäcksler nach Anspruch 1 und 2, **dadurch gekennzeichnet, dass** die Veränderung der Lage eines Führungselementes aktiv durch wenigstens einen Stellantrieb (21) erfolgen kann.

5. Vorsatzgerät (1) nach einem oder mehreren der vorhergehenden Ansprüche, **dadurch gekennzeichnet, dass** wenigstens einem Führungselement (16) ein Stellantrieb (21) derart zugeordnet ist, dass dieser den Abstand und/oder die Ausrichtung des Führungselements (16) in bezug auf den Förderbereich (20) verändern kann.

6. Vorsatzgerät (1) nach einem oder mehreren der vorhergehenden Ansprüche, **dadurch gekennzeichnet, dass** mehrer Führungselemente (16) einer Mäh- und Fördereinrichtung (2) als Gruppe zusammengefasst eine Einheit bildend, einem Stellantrieb (21) zugeordnet sind.

7. Vorsatzgerät (1) nach einem oder mehreren der vorhergehenden Ansprüche, **dadurch gekennzeichnet, dass** ein durch den Stellantrieb (21) betätigbares Führungselement (16) mit dem Förderbereich (20) der umlaufenden Fördertaschen (8) zumindest teilweise in Eingriff stehend bringbar ist.

8. Vorsatzgerät (1) nach einem oder mehreren der vorhergehenden Ansprüche, **dadurch gekennzeichnet, dass** ein durch den Stellantrieb (21) betätigbares Führungselement (16) mit dem Förderbereich (20) der umlaufenden Fördertaschen (8) außer Eingriff stehend bringbar ist

9. Vorsatzgerät (1) nach einem oder mehreren der vorhergehenden Ansprüche, **dadurch gekennzeichnet, dass** der Stellantrieb (21) ein druckmittelbeaufschlagter Hydraulikzylinder ist.

10. Vorsatzgerät (1) nach einem oder mehreren der vorhergehenden Ansprüche, **dadurch gekennzeichnet, dass** einem oder mehreren Führungselementen (16) zumindest eine Führungseinrichtung (29) zugeordnet ist.

11. Vorsatzgerät (1) nach einem oder mehreren der vorhergehenden Ansprüche, **dadurch gekennzeichnet, dass** die Führungseinrichtung (29) eine Linearbewegung ausführen kann.

12. Vorsatzgerät (1) nach einem oder mehreren der vorhergehenden Ansprüche, **dadurch gekennzeichnet, dass** die Führungseinrichtung (29) eine Schwenkbewegung ausführen kann.

13. Vorsatzgerät (1) nach einem oder mehreren der vorhergehenden Ansprüche, **dadurch gekennzeichnet, dass** die Führungseinrichtung (29) eine kombinierte Linear- und Schwenkbewegung ausführen kann.

14. Vorsatzgerät (1) nach einem oder mehreren der vorhergehenden Ansprüche, **dadurch gekennzeichnet, dass** die Steuerung eines Stellantriebs (21) in den automatischen Ablauf einer Steuerkette zur Einleitung und Beendigung des Reversierens der Mäh- und Fördereinrichtung (2) und der Einzugsorgane des Häckselaggregats integriert ist.

15. Vorsatzgerät (1) nach einem oder mehreren der vorhergehenden Ansprüche, **dadurch gekennzeichnet, dass** die Einwirkstellung der Führungselemente (16) durch Betätigung der Stellantriebe (21) im laufenden Erntebetrieb fernbedienbar ansteuerbar veränderbar ist.

16. Vorsatzgerät (1) nach einem oder mehreren der vorhergehenden Ansprüche, **dadurch gekennzeichnet, dass** mehrere Stellantriebe (21) eines Vorsatzgerätes (1) mittels einer Gleichgangeinrichtung, beispielsweise mittels eines Mengenteilers (36), in ihrem Bewegungsablauf synchronisiert sind.

17. Vorsatzgerät (1) nach einem oder mehreren der vorhergehenden Ansprüche, **dadurch gekennzeichnet, dass** die Fördertaschen (8) bildenden Förderelemente der Mäh- und Fördereinrichtung (2) Bestandteil von Mäh- und Förderrotoren (2',2") sind.

18. Vorsatzgerät (1) nach einem oder mehreren der vorhergehenden Ansprüche, **dadurch gekennzeichnet, dass** die Fördertaschen (8) bildenden Förderelemente der Mäh- und Fördereinrichtung (2') Teil einer umlaufenden Gliederkette, die einen Endlosstrang bilden, sind.

19. Verfahren zum Ernten von stängeligem Erntegut, wie beispielsweise Mais, mit einem Vorsatzgerät (1) mit wenigstens einer Mäh- und Fördereinrichtung (2), wobei die wenigstens eine Mäh- und Fördereinrichtung (2) angetriebene Förderelemente mit Fördertaschen (8) zum Halten und Fördern der Stängel aufweist, und den Förderelementen in Fahrtrichtung (F) ein oder mehrere Führungselemente (16) vorgeordnet sind, die die Einweisung der Stängel in die Fördertaschen (8) unterstützen, **dadurch gekennzeichnet, dass** der wenigstens einen Mäh- und Fördereinrichtung (2) ein relativ zu dieser wenigstens einen Mäh- und Fördereinrichtung (2) bewegbares Führungselement (16) zugeordnet ist, und die Bewegung des zumindest einen Führungselements (16) an die Bewegungsrichtung der wenigstens einen Mäh- und Fördereinrichtung (2) gekoppelt ist.

## Claims

1. A front implement (1) for harvesting stalked crop material such as for example maize comprising at least one cutting and conveying device (2), wherein the at least one cutting and conveying device (2) has driven conveyor elements with conveyor pockets (8) for holding and conveying the stalks and arranged in front of the conveyor elements in the travel direction (F) are one or more guide elements (16) which support feeding the stalks into the conveyor pockets (8), **characterised in that** at least one guide element (16) is movable relative to the at least one cutting and conveying device (2) which is operatively connected to said guide element (16).

2. A front implement (1) for forage harvesters according to claim 1 **characterised in that** the change in the position of a guide element can be effected passively or actively.

3. A front implement (1) for forage harvesters according to claim 1 and claim 2 **characterised in that** a guide element can change its position passively under the effect of external forces which are originally to be associated with the flow of material itself as part of the conveyor operation.

4. A front implement (1) for forage harvesters according to claim 1 and claim 2 **characterised in that** the change in the position of a guide element can be effectively actively by at least one control drive (21).

5. A front implement (1) according to one or more of the preceding claims **characterised in that** a control drive (21) is associated with at least one guide element (16) in such a way that it can change the spacing and/or the orientation of the guide element (16) in relation to the conveyor region (20).

6. A front implement (1) according to one or more of the preceding claims **characterised in that** a plurality of guide elements (16) of a cutting and conveying device (2) combined together as a group forming a unit are associated with a control drive (21).

7. A front implement (1) according to one or more of the preceding claims **characterised in that** a guide element (16) which is actuable by the control drive (21) can be at least partially brought into engagement with the conveyor region (20) of the rotating conveyor pockets (8).

8. A front implement (1) according to one or more of the preceding claims **characterised in that** a guide element (16) which is actuable by the control drive (21) can be brought out of engagement with the conveyor region (20) of the rotating conveyor pockets (8).

9. A front implement (1) according to one or more of the preceding claims **characterised in that** the control drive (21) is a pressure fluid-actuated hydraulic cylinder.

10. A front implement (1) according to one or more of the preceding claims **characterised in that** at least one guide device (29) is associated with one or more guide elements (16).

11. A front implement (1) according to one or more of the preceding claims **characterised in that** the guide device (29) can perform a linear movement.

12. A front implement (1) according to one or more of the preceding claims **characterised in that** the guide device (29) can perform a pivotal movement.

13. A front implement (1) according to one or more of the preceding claims **characterised in that** the guide device (29) can perform a combined linear and pivotal movement.

14. A front implement (1) according to one or more of the preceding claims **characterised in that** the control of a control drive (21) is integrated into the automatic implementation of a control chain for initiating and terminating reversal of the cutting and conveying device (2) and the intake members of the chopping assembly.

15. A front implement (1) according to one or more of the preceding claims **characterised in that** the operative position of the guide elements (16) can be changed controllably by remote actuation by actuation of the control drives (21) in ongoing harvesting operation.

16. A front implement (1) according to one or more of the preceding claims **characterised in that** a plurality of control drives (21) of a front implement (1) are synchronised in their movements by means of a synchronising device, for example by means of a quantity divider (36).

17. A front implement (1) according to one or more of the preceding claims **characterised in that** the conveyor elements forming conveyor pockets (8) of the cutting and conveying device (2) are a component of cutting and conveying rotors (2', 2").

18. A front implement (1) according to one or more of the preceding claims **characterised in that** the conveyor elements forming conveyor pockets (8) of the cutting and conveying device (2') are part of a circulating link chain forming an endless line.

19. A method of harvesting stalked crop material such as for example maize with a front implement (1) comprising at least one cutting and conveying device (2), wherein the at least one cutting and conveying device (2) has driven conveyor elements with conveyor pockets (8) for holding and conveying the stalks and arranged in front of the conveyor elements in the travel direction (F) are one or more guide elements (16) which support feeding the stalks into the conveyor pockets (8), **characterised in that** associated with the at least one cutting and conveying device (2) is a guide element (16) which is movable relative to said at least one cutting and conveying device (2) and the movement of the at least one guide element (16) is coupled to the direction of movement of the at least one cutting and conveying device (2).

## Revendications

1. Engin frontal (1) pour la récolte de produit à récolter à tiges, comme par exemple de maïs, avec au moins un dispositif de moissonnage et d'amenée (2), le dispositif de moissonnage et d'amenée (2) au nombre d'au moins un comportant des éléments d'amenée entraînés pourvus de poches d'amenée (8) pour retenir et amener les tiges, et les éléments d'amenée étant précédés, par rapport à la direction de déplacement (F), par un ou plusieurs éléments de guidage (16) qui favorisent l'acheminement des tiges vers les poches d'amenée (8), **caractérisé en ce qu'**au moins un élément de guidage (16) est déplaçable par rapport au dispositif de moissonnage et d'amenée (2), au nombre d'au moins un, en liaison active avec cet élément de guidage (16).

2. Engin frontal (1) pour ensileuse selon la revendication 1, **caractérisé en ce que** le changement de position d'un élément de guidage peut s'effectuer de manière passive ou active.

3. Engin frontal (1) pour ensileuses selon la revendication 1 ou 2, **caractérisé en ce qu'**un élément de guidage peut changer de position de manière passive sous l'action de forces extérieures naturellement imposées au flux de produit proprement dit dans le cadre du processus d'amenée.

4. Engin frontal (1) pour ensileuse selon la revendication 1 ou 2, **caractérisé en ce que** le changement de position d'un élément de guidage peut s'effectuer de manière active à l'aide d'au moins un mécanisme de positionnement (21).

5. Engin frontal (1) selon une ou plusieurs des revendications précédentes, **caractérisé en ce qu'**à au moins un élément de guidage (16) est associé un mécanisme de positionnement (21), de façon que celui-ci puisse modifier la distance et/ou l'orientation de l'élément de guidage (16) par rapport à la zone d'amenée (20).

6. Engin frontal (1) selon une ou plusieurs des revendications précédentes, **caractérisé en ce que** plusieurs éléments de guidage (16) d'un dispositif de moissonnage et d'amenée (2) sont réunis en un groupe pour former un module associé à un mécanisme de positionnement (21).

7. Engin frontal (1) selon une ou plusieurs des revendications précédentes, **caractérisé en ce qu'**un élément de guidage (16) actionné par le mécanisme de positionnement (21) peut être engagé au moins partiellement dans la zone d'amenée (20) des poches d'amenée périphériques (8).

8. Engin frontal (1) selon une ou plusieurs des revendications précédentes, **caractérisé en ce qu'**un élément de guidage (16) actionné par le mécanisme de positionnement (21) peut être dégagé de la zone d'amenée (20) des poches d'amenée périphériques (8).

9. Engin frontal (1) selon une ou plusieurs des revendications précédentes, **caractérisé en ce que** le mécanisme de positionnement (21) est un vérin hydraulique actionné par un fluide sous pression.

10. Engin frontal (1) selon une ou plusieurs des revendications précédentes, **caractérisé en ce qu'**au moins un dispositif de guidage (29) est associé à un ou plusieurs éléments de guidage (16).

11. Engin frontal (1) selon une ou plusieurs des revendications précédentes, **caractérisé en ce que** le dispositif de guidage (29) peut effectuer un déplacement linéaire.

12. Engin frontal (1) selon une ou plusieurs des revendications précédentes, **caractérisé en ce que** le dispositif de guidage (29) peut effectuer un mouvement pivotant.

13. Engin frontal (1) selon une ou plusieurs des revendications précédentes, **caractérisé en ce que** le dispositif de guidage (29) peut effectuer un mouvement linéaire et pivotant combiné.

14. Engin frontal (1) selon une ou plusieurs des revendications précédentes, **caractérisé en ce que** la commande d'un mécanisme de positionnement (21) est intégrée à l'exécution automatique d'une boucle d'asservissement visant à déclencher et interrompre l'inversion de marche du dispositif de moissonnage et d'amenée (2) et des organes d'alimentation de l'équipement d'ensilage.

15. Engin frontal (1) selon une ou plusieurs des revendications précédentes, **caractérisé en ce que** la position active des éléments de guidage (16) peut être modifiée à distance au cours de la récolte en actionnant les mécanismes de positionnement (21).

16. Engin frontal (1) selon une ou plusieurs des revendications précédentes, **caractérisé en ce que** plusieurs mécanismes de positionnement (21) d'un engin frontal (1) sont synchronisés, sur le plan de leur séquence de déplacement, au moyen d'un dispositif d'uniformisation de marche, par exemple au moyen d'un diviseur de débit (36).

17. Engin frontal (1) selon une ou plusieurs des revendications précédentes, **caractérisé en ce que** les éléments d'amenée du dispositif de moissonnage et d'amenée (2) formant des poches d'amenée (8) font partie intégrante de rotors de moissonnage et d'amenée (2', 2").

18. Engin frontal (1) selon une ou plusieurs des revendications précédentes, **caractérisé en ce que** les éléments d'amenée du dispositif de moissonnage et d'amenée (2') formant des poches d'amenée (8) font partie d'une chaîne à maillons rotative qui forme un brin sans fin.

19. Procédé pour la récolte de produit à récolter à tiges, comme par exemple de maïs, avec un engin frontal (1) muni d'au moins un dispositif de moissonnage et d'amenée (2), le dispositif de moissonnage et d'amenée (2) au nombre d'au moins un comportant des éléments d'amenée entraînés pourvus de poches d'amenée (8) pour retenir et amener les tiges, et les éléments d'amenée étant précédés, par rapport à la direction de déplacement (F), par un ou plusieurs éléments de guidage (16) qui favorisent l'acheminement des tiges vers les poches d'amenée (8), **caractérisé en ce qu'**au dispositif de moissonnage et d'amenée (2) au nombre d'au moins un est associé un élément de guidage (16) déplaçable par rapport au dispositif de moissonnage et d'amenée (2) au nombre d'au moins un, et le déplacement de l'élément de guidage (16) au nombre d'au moins un est couplé à la direction de déplacement du dispositif de moissonnage et d'amenée (2) au nombre d'au moins un.
